# EUROPÄISCHE PATENTSCHRIFT

(11) **EP 1 225 355 B1**
(45) Veröffentlichungstag und Bekanntmachung des Hinweises auf die Patenterteilung: **14.06.2006**
(21) Anmeldenummer: 02000679.7
(22) Anmeldetag: 11.01.2002
(51) Int. Cl.: F16C 33/78, F16D 3/41

(54) **Dichtungssystem für ein Lager eines Kreuzgelenkes**
Seal device for a bearing of an universal joint
Système d'étanchéite pour un palier de joint de cardan

(30) Priorität: 19.01.2001 DE 10102302
(43) Veröffentlichungstag der Anmeldung: 24.07.2002
(73) Patentinhaber: G. Elbe & Sohn GmbH & Co. KG, 74321 Bietigheim-Bissingen (DE)
(72) Erfinder: Mondry, Siegfried, 74321 Bietigheim-Bissingen (DE)
(74) Vertreter: Thews, Karl

(56) Entgegenhaltungen:
- DE-A- 4 131 694
- DE-A- 19 654 234
- DE-A- 19 754 699
- DE-C- 19 637 553
- DE-U- 9 005 935
- US-A- 5 269 539
- US-A- 5 769 723

## Beschreibung

Die Erfindung bezieht sich auf ein Dichtungssystem für einen in einer Lagerbuchse mit einer Stirnfläche aufgenommenen Gelenkkreuzzapfen mit einem eine umlaufende Dichtfläche bildenden Konusteil, bestehend aus
a) zwei ringförmigen, in bzw. an die Lagerbuchse einsetzbaren und eine gegenseitige Verstellung zulassenden Dichtungskörpern mit zumindest einer Metallarmierung, wobei
b) zumindest der eine als Vordichtung ausgebildete Dichtungskörper aus einem nichtmetallischen Material oder einem Kunststoffmaterial gebildet ist, relativ zum anderen als Hauptdichtung ausgebildeten Dichtungskörper verdrehbar ist und einen in radialer Richtung nach innen gerichteten Ansatz mit einer innenliegenden Stirnseite aufweist, wobei
c) die Vordichtung die Hauptdichtung zumindest teilweise überlappt.

Dichtungssysteme, bei denen die Hauptabdichtung auf einem konischen Übergang zwischen der zylindrischen Wälzkörperfläche des Gelenkkreuzzapfens und dem zentralen Gelenkkreuzkörper stattfindet, sind aus der DE 41 31 694 A1 und aus der DE 196 54 234 A1, siehe Oberbegriff des Anspruchs 1, bekannt. An diesem konischen Übergang liegen mit einer bestimmten Vorspannung eine oder mehrere Dichtlippen der Hauptdichtung an, die im Regelfall ortsfest mit der Lagerbuchse verbunden ist. Dieser konische Übergang ist wegen der an den Gelenkkreuzzapfen bei Übertragung hoher Drehmomente auftretenden großen Belastungen vorteilhaft, erschwert jedoch die Anbringung einer Vordichtung, welche vor der Hauptdichtung angeordnet ist und diese zum einen vor direktem Kontakt mit Fremdstoffen schützen und zum anderen die Dichtwirkung insgesamt erhöhen soll. Derartige Vordichtungen sind in der Regel ortsfest am Übergang zwischen der zylindrischen Wälzkörperfläche des Gelenkkreuzzapfens und dem zentralen Gelenkkreuzkörper angebracht. Ihre Dichtlippen sind so angeordnet, dass die Abdichtung entweder auf einem Ansatz am Außendurchmesser der Lagerbuchse, oder an einer Verlängerung der Hauptdichtung, oder einer Kombination von Lagerbuchse und Hauptdichtung stattfindet. Um den nötigen Festsitz der Vordichtung zu erreichen, ist der konische Übergangsbereich bei der bekannten Lösung gemäß DE-A-1 965 4234 mit einer zylindrischen Eindrehung versehen, die den Konus unterbricht und mit einem Übergangsradius zentralen Gelenkkreuzkörper übergeht. Auf diese zylindrische Eindrehung wird dann die Vordichtung mit entsprechender Vorspannung aufgepresst. Nachteilig ist dabei die Festigkeitsmindening, die durch die zylindrische Eindrehung an dem genannten Übergangsbereich entsteht.

Der Erfindung liegt deshalb die Aufgabe zugrunde, das Dichtungssystem derart auszubilden und anzuordnen, dass die Position der Vordichtung über die Hauptdichtung in axialer Richtung auf einfache Weise und eindeutig festgelegt und gleichzeitig die Abdichtung zwischen Vor- und Hauptdichtung gewährleistet ist.

Gelöst wird die Aufgabe erfindungsgemäß dadurch, dass die Metallarmierung einen L-förmigen Querschnitt mit einem sich in radialer Richtung erstreckenden, äußeren Schenkel aufweist, die Hauptdichtung über den äußeren Schenkel in axialer Richtung an die Stirnfläche anlegbar ist, und die Stirnseite des Ansatzes in axialer Richtung gegen den äußeren Schenkel anlegbar ist. Voraussetzung dafür ist, dass die Vordichtung mit ihrer elastischen Haft-/Dichteinlage ständig mit einer definierten Vorspannung gegen den Konus gepresst wird.

Der Anpressdruck wiederum wird erfindungsgemäß dadurch erzeugt, dass das offene Ende der Lagerbuchse bzw. die Stahlarmierung der in die Lagerbuchse eingepressten Hauptdichtung mit einer definierten axialen Vorspannung an einer dafür vorgesehenen Anlagefläche des Dichtungskörpers der Vordichtung anliegt. Diese Vorspannung wird durch eine geeignete Abstimmung der Längenmaße von Lagerbuchse und Gelenkkreuzzapfen erzielt. Dadurch wird die gesamte Vordichtung gegen den konischen Zapfenbereich gepresst und mit diesem drehfest verbunden. Auf diese Weise entsteht ein Dichtungssystem, bei dem die Hauptdichtung, drehfest verbunden mit der Lagerbuchse, zusammen mit dieser eine oszillierende Bewegung in Bezug zur Vordichtung ausüben kann, die ihrerseits wiederum drehfest mit dem konischen Bereich des Gelenkkreuzzapfens verbunden ist.

Die Lagerbuchse und der Gelenkkreuzzapfen sind in eingebautem Zustand des Dichtungssystems funktional beteiligt und somit Teil des Systems. Es ist vorgesehen, dass die Vordichtung die Lagerbuchse zumindest teilweise überlappt.

In weiterer Ausgestaltung der Erfindung ist es vorteilhaft, dass die Vordichtung aus einem Kunststoffmaterial mit hoher Verschleißfestigkeit und niedrigem Reibungskoeffizienten besteht und dass der Ansatz der Vordichtung zur Aufnahme und Abtützung der Haft-/Dichteinlage dient.

Vorteilhaft ist es außerdem, dass die Haft-/Dichtfläche der Vordichtung aus einem hochelastischen Elastomer mit hohem Reibungskoeffizienten besteht und dass die Haft-/Dichteinlage der Vordichtung eine Einbuchtung sowie ein oder mehrere Dichtelemente aufweist, die gegen die Dichtfläche des Konusteils anlegbar und an die plane Dichtfläche anpassbar ist.

Hierzu ist es vorteilhaft, dass die sich kontinuierlich erweiternde Dichtfläche zumindest teilweise als Konusteil ausgebildet ist und dass zumindest die die Metallarmierung aufweisende Hauptdichtung ein oder mehrere Dichtlippen aufweist, die gegen das Konusteil des Gelenkkreuzzapfens anlegbar sind.

In weiterer Ausgestaltung der Erfindung ist es vorteilhaft, dass die mehrere Dichtlippen aufweisende Hauptdichtung einen parallel zur Mittelachse der Lagerbuchse angeordneten Ringraum aufweist, in dem die Stahlarmierung eingesetzt und/oder einvulkanisiert ist, und dass zur Aufnahme der Stahlarmierung zwischen dem offenen Ende der Lagerbuchse und einem Teil der Vordichtung ein Ringspalt vorgesehen ist.

Ferner ist es vorteilhaft, dass alle Dichtlippen und alle Dichtelemente auf dem Konusteil zur Anlage bringbar sind und/oder etwa in einer Ebene liegen und dass die Dichtlippen und die Dichtelemente mit Bezug auf den Außendurchmesser des Konusteils ein Übermaß aufweisen.

Vorteilhaft ist es außerdem, dass infolge dieses Übermaßes nach der Montage des Gelenkes eine axiale Kraft F1 entsteht, durch die die innere Stirnseite des Ansatzes der Vordichtung gegen den äußeren Schenkel der Stahlarmierung und/oder gegen die Stirnfläche der Lagerbuchse gepresst wird, und dass durch Anpressung der inneren Stirnseite des Ansatzes gegen diesen Schenkel der Stahlarmierung und/oder gegen die Stirnfläche eine zusätzliche Dichtfläche entsteht.

In weiterer Ausgestaltung der Erfindung ist es vorteilhaft, dass die innere Stirnseite des Ansatzes der Vordichtung zur Verringerung der Reibung mehrere radiale Ausnehmungen aufweisen kann, die als Schmiertaschen fungieren, und dass zur Aufnahme eines offenen Endes der Lagerbuchse die Vordichtung mit der Hauptdichtung einen Ringraum bildet.

Ferner ist es vorteilhaft, dass die Hauptdichtung mit der Lagerbuchse gegenüber der Vordichtung und dem Gelenkkreuzzapfen oszilliert. Die Vordichtung überlappt die Hauptdichtung und die Lagerbuchse zumindest teilweise. Die Vordichtung liegt mittels der Metallarmierung gegen die Lagerbuchse und/oder gegen die Hauptdichtung an und/oder steht mit dieser in Wirkverbindung, d. h. sie ist zu dieser relativ verdrehbar.

Vorteilhaft ist ferner, dass zur Aufnahme des Schenkels der Stahlarmierung zwischen einem Ende der Lagerbuchse und einem Teil der Vordichtung ein Ringspalt vorgesehen ist.

Da die Hauptdichtung bzw. der erste Dichtungskörper aus Kautschuk bzw. aus einem Gummikörper besteht, lässt sich dieser ohne weiteres an der Lagerbuchse anvulkanisieren, so dass dieser mit der Lagerbuchse drehbar bzw. oszillierend verbunden ist. In vorteilhafter Weise ist das Umhüllungsteil, das den ersten und auch den zweiten Dichtungskörper ringförmig einschließt, so angeordnet, dass Schmutzteile nicht in den Innenraum bzw. in den Lagerbereich der Gelenkkreuzwelle eindringen können. Ferner ist es vorteilhaft, dass der zweite Dichtungskörper als elastischer Thermoplast- bzw. Kunststoffkörper ausgebildet ist, der wiederum auf dem Gelenkkreuzzapfen drehfest aufsitzt. Auf diese Weise können die beiden Dichtungskörper eine oszillierende Bewegung gegeneinander ausführen. Bei der Montage der zweiten Dichtung bzw. der Vordichtung wird diese über den stirnseitigen Ansatz der Lagerbuchse geschoben und bildet in Verbindung mit der Form- und Reibschlussverbindung eine Montageeinheit und somit zusätzlich eine Abdichtung im Bereich der am Ring ausgebildeten, radial umlaufenden Nase.

Vorteilhaft ist es, dass zumindest der eine die Metallarmierung aufweisende Dichtungskörper ein oder mehrere Dichtelemente aufweist, die gegen ein Konusteil des Gelenkkreuzzapfens anliegen. Durch die Verwendung der Metallarmierung kann auf vorteilhafte Weise der erste Dichtungskörper abgestützt und in der vorgewählten Position auf dem Konusteil fixiert werden. Durch die schlechteren bzw. unterschiedlichen Reibkoeffizienten zwischen Gummi und Stahl von der Vordichtung und der Gelenkkreuzwelle sowie dem Kunststoffteil der Umhüllungseinrichtung und dem Stahlteil der Stahlarmierung wird ferner sichergestellt, dass die Vordichtung auf dem Gelenkkreuzkonus fest aufsitzt und eine Relativbewegung zwischen der Vordichtung und der Lagerbuchse bzw. der Vordichtung und der Stahlarmierung ohne weiteres gewährleistet. Die Reibfläche zwischen der Stahlarmierung und der Vordichtung stellt darüber hinaus eine zusätzliche Abdichtung dar.

Eine zusätzliche Möglichkeit ist gemäß einer Weiterbildung, dass der Dichtungskörper der Hauptdichtung an dem den Dichtungselementen abgelegenen Ende eine Anlagefäche aufweist, mittels derer der Dichtungskörper gegen das eine Ende eines Wälzkörpers mittel- oder unmittelbar anliegt. Hierzu kann es vorteilhaft sein, zwischen der Anlagefläche dieses Dichtungskörpers und der Stirnseite eine Lagerscheibe aus Stahl vorzusehen, so dass durch die Bewegung des Wälzkörpers kein Abrieb an der Stirnfläche des Hauptdichtungskörpers eintritt.

Gemäß einer bevorzugten Ausführungsform der erfindungsgemäßen Lösung ist schließlich vorgesehen, dass der zweite Dichtungskörper, Vordichtungskörper, ein oder mehrere Dichtungselemente aufweist, die gegen die Oberfläche des Konusteils anliegen.

Von besonderer Bedeutung ist für die vorliegende Erfindung, dass der zweite Dichtungskörper ein oder mehrere wulstartige Dichtungselemente aufweist, die gegen die Oberfläche des Konusteils anliegen und sich an die plane Oberfläche des Konusteils anpassen.

Vorteilhaft ist es ferner, dass der zweite Dichtungskörper zur Aufnahme eines Ansatzes des Umhüllungsteils mindestens ein in etwa konkav ausgebildetes Aufnahmeteil aufweist.

Durch die erfindungsgemäße Ausbildung und Anordnung des Dichtungssystems erhält man eine Vordichtung, deren primäre Aufgabe darin besteht, die Hauptdichtung vor Schmutzeinflüssen und Beschädigungen zu schützen. Hierzu ist die Vordichtung in vorteilhafter Weise ringförmig ausgebildet und aus einem Kautschuk- bzw. Gummiwerkstoff geformt. Bei der Montage der Vordichtung kann, wie bereits erwähnt, der ringförmige Teil über den stirnseitigen Ansatz der Lagerbuchse geschoben werden und bildet dadurch einen Form- und Reibschluss bzw. eine Montageeinheit und zusätzlich auch eine Abdichtung im Bereich der am Ring ausgebildeten, radial umlaufenden Nase. Eine Tellerfeder, der Wälzkörper und die zwei Dichtlippen aufweisende Hauptdichtung sollten vorteilhafterweise schon vormontiert sein. Bei der nun anschließenden Montage auf dem Gelenkkreuz schmiegt sich in vorteilhafter Weise der Gummiteil der Hauptdichtung an der Oberfläche des Konus des Gelenkkreuzzapfens an und bildet damit die Hauptabdichtung. Dies wird auch dadurch erreicht, dass der zur Verfügung stehende Bauraum zwischen Lagerbuchse und Gelenkkreuzkonus kleiner ist als der benötigte Bauraum für die Vordichtung oder den zweiten Dichtungskörper. Durch die Verwendung einer Stahlarmierung zur Aufnahme der Hauptdichtung mit den beiden Dichtlippen wird eine axiale Fixierung der Vordichtung in Richtung der Lagerbuchsen auf einfache Weise erzielt. Das Übermaß der Vordichtung bzw. des zweiten Dichtungskörpers wird, wie bereits erwähnt, elastisch so verformt, dass eine glatte Oberfläche entsteht und die axiale Kraft F1, die zwischen den einzelnen Bauteilen wirkt, die erforderliche Anpresskraft zwischen dem Gelenkkreuzzapfen und den Dichtungselementen erzeugt.

Vorteilhaft ist es ferner, wenn der Dichtungskörper der Vordichtung zur Aufnahme und Abstützung der elastischen Haft-Dichteinlage mindestens einen in etwa konkav ausgebildeten Aufnahmebereich aufweist.

Außerdem ist es vorteilhaft, dass zwischen Vordichtung und Hauptdichtung ein Ringraum gebildet wird, der, mit einem geeigneten Schmiermittel ausgefüllt, eine zusätzliche Barriere gegen eventuell eindringende Feuchtigkeit bildet.

Durch die erfindungsgemäße Ausbildung und Anordnung des Dichtungssystems erhält man eine Vordichtung, deren primäre Aufgabe darin besteht, die Hauptdichtung vor Schmutzeinflüssen und Beschädigungen zu schützen, wie sie beispielsweise beim Reinigen mit einem harten Wasserstrahl entstehen können. Hierzu ist die Vordichtung in vorteilhafter Weise ringförmig ausgebildet. Sie wird mit ihrem Dichtansatz auf den stirnseitigen Ansatz der Lagerbuchse aufgeschoben und bildet mit dieser eine Montageeinheit. Eine Tellerfeder zur axialen Vorspannung und Führung der Wälzkörper, die Wälzkörper selbst sowie die Hauptdichtung sollten vorteilhafterweise schon vormontiert sein.

Bei der späteren Montage des Gelenkes schmiegen sich in vorteilhafter Weise die Dichtlippen der Hauptdichtung an die Oberfläche des konischen Bereichs des Gelenkkreuzzapfens an und bilden damit die Hauptabdichtung. Gleichzeitig wird über die Stahlarmierung der Hauptdichtung die Vordichtung axial auf den restlichen Teil des Konus aufgeschoben, wodurch sich die weiche Haft-/Dichteinlage der Vordichtung gegen den Konus presst und sich elastisch so verformt, dass eine dichte, drehfeste Verbindung der Vordichtung mit dem Konus entsteht.

Weitere Vorteile und Einzelheiten der Erfindung sind in den Patentansprüchen und der Beschreibung erläutert und in den Figuren dargestellt. Es zeigt:
- Figur 1: eine komplette Lagerbuchse im Halbschnitt mit dem vorerwähnten Dichtungssystem, bestehend aus einer in die Lagerbuchse eingesetzten Hauptdichtung und einer mit der Lagerbuchse eine Montageeinheit bildenden, diese teilweise umhüllenden Vordichtung,
- Figur 2: eine schematische Darstellung eines Kreuzgelenkes, teilweise im Schnitt,
- Figur 3: eine vergrößerte Darstellung der beiden in Figur 2 dargestellten Dichtungskörper mit dem Konusbereich des Gelenkkreuzzapfens, wobei die Anlagefläche des Dichtungskörpers der Vordichtung, die an der Stahlarmierung der Hauptdichtung anliegt, ohne radiale Ausnehmungen, also als gleichzeitige Dichtfläche ausgebildet ist,
- Figur 4: eine Darstellung wie in Figur 3 gezeigt, jedoch mit radialen Ausnehmungen an der Anlagefläche des Dichtungskörpers der Vordichtung, die als Schmiertaschen fungieren.

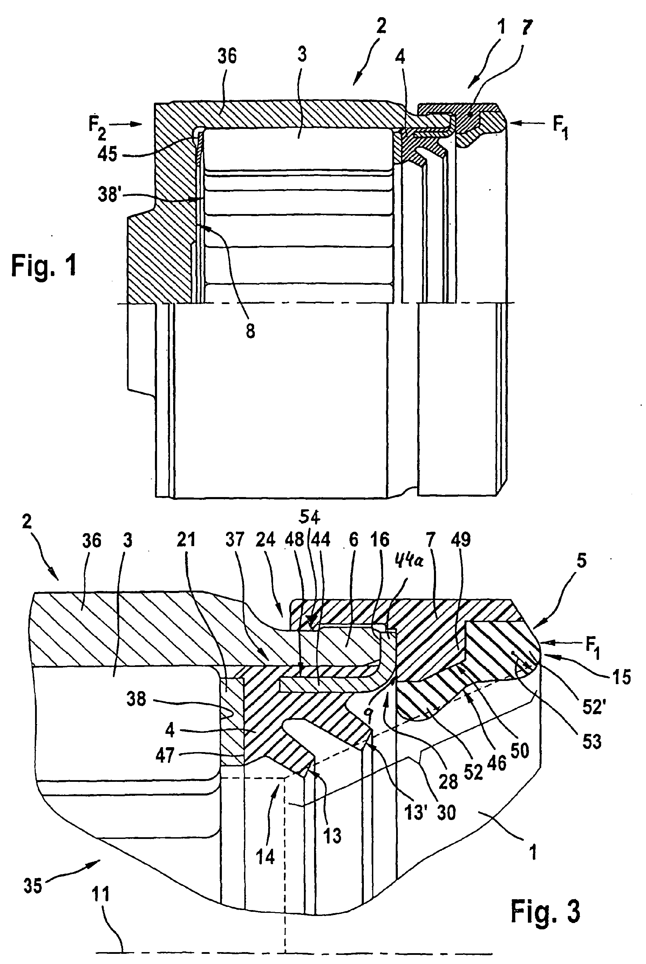

In der Zeichnung ist in Figur 1 ein Kreuzgelenk schematisch dargestellt. Derartige Gelenke und Gelenkwellen sowie die meisten Ausgleichskupplungen dienen zum Ausgleich geringer Wellenverlagerungen. Eine Ausnahme bilden Doppelkreuzgelenke, wie sie beispielsweise in angetriebenen Lenkachsen von Ackerschleppern oder Nutzfahrzeugen zur Anwendung kommen. Diese Doppelkreuzgelenke sind für Beugewinkel bis zu 55° ausgelegt, wobei die Drehzahlen bei derart großen Beugewinkeln im Gegensatz zu schnelldrehenden Gelenkwellen niedrig sind.

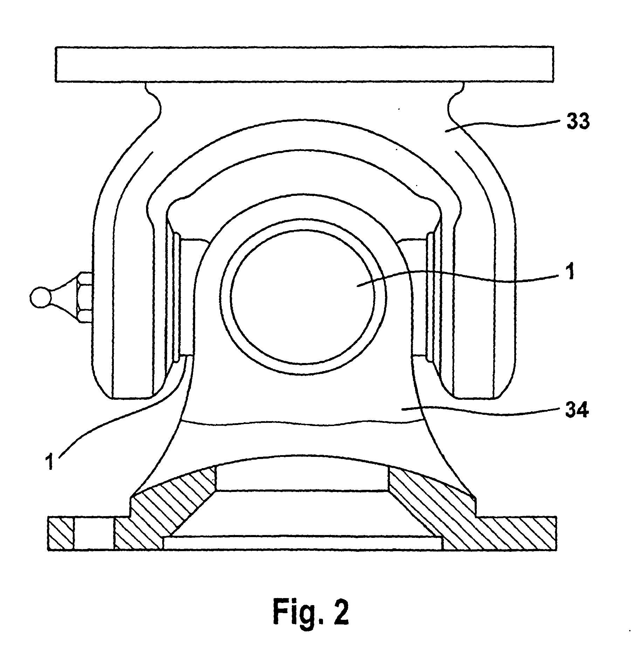

In **Figur 2** sind zwei Gelenkgabeln 33 und 34 über vier Gelenkkreuzzapfen 1 miteinander verbunden. Die Gelenkgabeln 33, 34 können beispielsweise aus Vergütungsstahl gesenkgeschmiedet sein. Das Zapfenkreuz mit den vier Gelenkkreuzzapfen 1 besteht normalerweise aus hochwertigem Einsatzstahl und ist in Wälzlagern 3 (siehe **Figur 1**) aufgenommen. Ein besonderes Problem ist dabei die einwandfreie Abdichtung dieser Wälzlager **3,** in denen der Gelenkkreuzzapfen 1, wie in **Fig. 2 bis 4** schematisch wiedergegeben, gelagert ist. Der Gelenkkreuzzapfen 1 besteht aus einem zylinderförmigen Zapfenteil 35, das mittels zylinderförmiger Wälzkörper 3 in einer Lagerbuchse 2 drehbar aufgenommen ist.

Die Lagerbuchse 2 besteht aus einem zylinderförmigen Gehäuseteil 36 mit einem Boden 8, der eine plane Stirnfläche aufweist. Am offenen Ende der Lagerbuchse 2 befindet sich eine ringförmige Aussparung 37 zur Aufnahme von mindestens einem ersten ringförmigen Dichtungskörper 4, der auch als Hauptdichtung bezeichnet ist und mit einem zweiten, ebenfalls ringförmig ausgebildeten Dichtungskörper 7 zusammenwirkt. Dieser zweite Dichtungskörper 7 wird, zusammen mit seiner elastischen Haft-/Dichteinlage 5, auch als Vordichtung bezeichnet. Die beiden Dichtungskörper 4 und 7 bilden im wesentlichen das Abdichtungssystem zwischen dem Außen- und Innenbereich der Lagerbuchse 2.

Zwischen dem Boden 8 und dem ersten Dichtungskörper 4 befinden sich die bereits erwähnten Wälzkörper 3 zur Lagerung des Zapfenteils 35 des Gelenkkreuzzapfens 1. Dieser Innenraum wird durch die beiden Dichtungskörper 4 und 7 auf vorteilhafte Weise unter Vermeidung großer Reibungskräfte gegenüber Feuchtigkeit und Fremdkörpern abgedichtet.

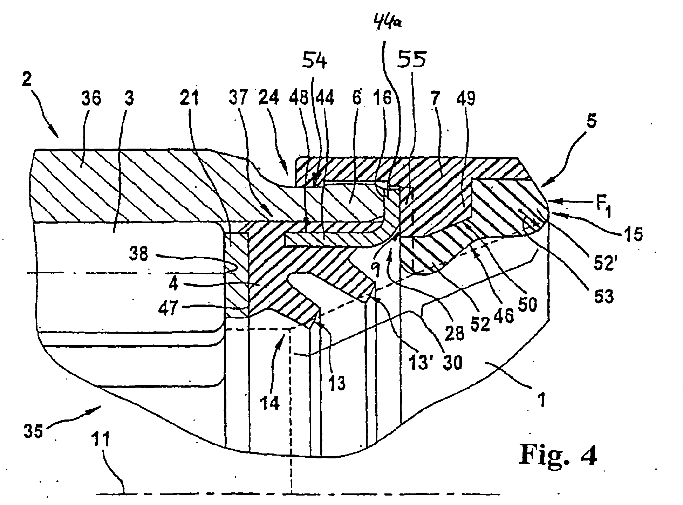

In der ringförmigen Aussparung 37 (siehe Fig. 3), die durch eine Stirnfläche 16 begrenzt wird, sitzt der bereits erwähnte erste Dichtungskörper 4, der in die ringförmige Aussparung 37 eingepresst werden kann, um eine gute Reibschlussverbindung zwischen dem Außendurchmesser des Dichtungskörpers 4 und der Innenoberfläche der Aussparung 37 sicherzustellen.

Wie aus Figur 3 hervorgeht, weist der Dichtungskörper 4 eine Anlagefläche 47 auf, die mit Abstand zur Stirnfläche 38 des Wälzkörpers 3 angeordnet ist. In diesem Zwischenraum befindet sich eine Lagerscheibe 21. An der zweiten Stirnseite 38' am linken Ende des Wälzkörpers 3 ist mit dem Boden 8 des Gehäuseteils 36 ein Ringspalt zur Aufnahme einer Tellerfeder 45 gebildet. Die Tellerfeder 45 drückt die Wälzkörper 3 über die Lagerscheibe 21 gegen den Dichtungskörper 4. Die Lagerscheibe 21 kann als gehärtete Stahlarmierung an den Dichtungskörper 4 anvulkanisiert sein, um auf diese Weise als verschleißfreie Anlage für die Wälzkörper 3 zu dienen. Die Wälzkörper 3 liegen, wie nachstehend näher erläutert, mit vordefinierter Kraft an der Lagerscheibe 21 an, wobei diese Anpresskraft durch die Tellerfeder 45 hervorgerufen wird, die sich, wie bereits erwähnt, am Boden 8 der Lagerbuchse 2 abstützt.

Der Dichtungskörper bzw. die Hauptdichtung 4 ist als Doppellippendichtung ausgebildet und weist hier zumindest zwei mit Bezug auf eine Mittelachse 11 geneigt verlaufende Dichtlippen 13, 13' auf, die gemäß Fig. 3 gegen ein Konusteil 30 des Gelenkkreuzzapfens 1 anliegen. In Fig. 3 ist der Gelenkkreuzzapfen 1 nur schematisch angedeutet, wobei die beiden Dichtlippen 13, 13' in unverformtem Zustand wiedergegeben sind, so dass sie gegenüber dem Außendurchmesser des Konusteils 30 des Gelenkkreuzzapfens 1 ein Übermaß aufweisen.

Wie aus Fig. 3 weiterhin hervorgeht, wird der erste Dichtungskörper 4 von dem Dichtungskörper 7 zumindest teilweise umgeben bzw. abgedeckt. Dieser Dichtungskörper 7 kann aus einem hochverschleißfesten Thermoplastwerkstoff bzw. Kunststoff mit möglichst niedrigem Reibungskoeffizienten gefertigt sein. Er besteht aus einer zylinderförmigen Buchse mit einer ersten Aussparung bzw. einen Ringraum 24 zur Aufnahme eines vorderen Endes 6 der Lagerbuchse 2, wobei das vordere Ende des Ringraums 24 in einen Dichtansatz 54 ausläuft, der unter radialer Vorspannung auf dem Ende 6 der Lagerbuchse 2 anliegt. Weiterhin ist der Dichtungskörper 7 mit einer zweiten Aussparung 15 zur Aufnahme der elastischen Haft-/Dichteinlage 5 versehen, die in die Aussparung 15 des Dichtungskörpers 7 eingeformt bzw. einvulkanisiert sein kann. An einer Fläche 50 des Dichtungskörpers 7 werden die beim Aufpressen der Haft-/Dichteinlage 5 auf den Konus 30 entstehenden Druckkräfte abgestützt.

Die Haft-/Dichteinlage 5, die aus einem hochelastischen Kautschukmaterial bzw. Gummi mit hohem Reibungskoeffizienten gefertigt sein kann, ist in Fig. 3 ebenfalls im entlasteten Zustand wiedergegeben, so dass sie mit Bezug auf den Außendurchmesser des Konusteils 30 ein Übermaß aufweist. Im entspannten Zustand weist die Dichteinlage 5 zwei mit Abstand zueinander angeordnete, ballige Dichtungselemente 52, 52' auf, die jeweils durch einen Radius 53 beschrieben werden. Zwischen diesen Dichtungselementen 52, 52' ist eine Einbuchtung 46 vorgesehen, die zusammen später im eingebauten Zustand eine durchgehende, plane Oberfläche bilden, die plan gegen die Oberfläche des Konusteils 30 anliegt. Die Hauptaufgabe der zweiten Dichtung bzw. der Vordichtung 7 besteht darin, den ersten Dichtungskörper bzw. die Hauptdichtung 4 vor äußeren Einflüssen wie Schmutz, Wasser oder anderen Fremdkörpern zu schützen.

Die Haft-/Dichteinlage 5 des Dichtungskörpers 7 ist, wie bereits erwähnt, an diesen anvulkanisiert bzw. in diesen eingepresst und somit mit diesem fest verbunden. Bei der Montage der Vordichtung wird der ringförmige Teil des Dichtungskörpers 7 mit dem Dichtansatz 54 über den stirnseitigen Ansatz der Lagerbuchse 2 geschoben und bildet mit dieser durch die Form- und Reibschlussverbindung eine Montageeinheit und gleichzeitig die gewünschte Abdichtung.

Der Dichtungskörper 7 bzw. dessen Ansatz 49 ist mit seiner innenliegenden Stirnseite 9 mit Abstand zu der Stirnfläche 16 des Ansatzes 6 der Lagerbuchse 2 angeordnet und bildet somit einen Ringspalt 28, in dem ein Schenkel einer im Querschnitt L-förmig ausgebildeten Stahlarmierung 44 aufgenommen ist. Dieser Schenkel wird nach erfolgter Montage des Gelenkes gegen die innere Stirnseite 9 des Ansatzes 49 gepresst und bildet zusammen mit dieser eine zusätzliche Dichtfläche. Durch die Anpressung wird gleichzeitig die Hauptdichtung 4 axial in der Lagerbuchse 2 fixiert, und die Haft/Dichteinlage 5 der Vordichtung 7 gegen den Zapfenkonus 30 gedrückt.

Bei Montage der Dichtungen wird der erste Dichtungskörper 4 in die Lagerbuchse 2 eingepresst, bis ein äußeren Schenkel 44a der Stahlarmierung 44 an der Stirnfläche 16 anliegt. Danach wird, wie bereits oben dargelegt, die Vordichtung 7 auf den stirnseitigen Ansatz der Lagerbuchse 2 aufgeschoben. Bei der späteren Montage des Gelenkes schmiegt sich die verformbare Haft-Dichteinlage 5 des Vordichtungskörpers 7 mit ihren beiden balligen Dichtungselementen 52, 52' gegen das Konusteil 30 des Gelenkkreuzzapfens 1 an und bildet damit eine wesentliche Abdichtung. Dies wird in vorteilhafter Weise dadurch erreicht, dass der zur Verfügung stehende Bauraum zwischen Lagerbuchse 2 und Gelenkkreuzkonus kleiner ist als der benötigte Bauraum der Vordichtung bzw. des Haft/Dichteinsatzes 5. Durch die in die Hauptdichtung 4 einvulkanisierte Stahlarmierung 44 wird eine axiale Fixierung der Vordichtung 7 in Richtung des Lagerbuchsenbodens erreicht. Durch das vorhandene Übermaß wird die Dichteinlage 5, wie bereits erwähnt, elastisch so verformt, dass sie plan gegen die Oberfläche des Konusteils 30 anliegt, wodurch eine axiale Kraft F1 zwischen den einzelnen Bauteilen wirkt. Durch den relativ schlechten Reibungskoeffizienten von Gummi auf Stahl bzw. Vordichtungsgummi auf den Gelenkkreuzkonus sowie dem guten Reibungskoeffizienten zwischen dem aus Kunststoff gebildeten Dichtungskörper 7 und der Stahlarmierung 44 sowie dem Dichtansatz 54 und der Lagerbuchse 2 wird sichergestellt, dass die Vordichtung 7 mit der einvulkanisierten / eingeklebten Haft-/Dichteinlage auf dem Gelenkkreuzkonus fest aufsitzt und somit eine Relativbewegung zwischen der Vordichtung 7 und der Hauptdichtung 4 möglich ist.

Vorteilhaft ist es auch, dass im eingebauten Zustand beider Dichtungskörper 4 und 7 alle Dichtungselemente 13, 13', 52, 52' der beiden Dichtungskörper 4 und 7 auf der planen Oberfläche im Bereich 14 des Konusteils 30 angepresst sind und somit in einer Ebene liegen.

## Patentansprüche

1. Dichtungssystem für einen in einer Lagerbuchse (2) mit einer Stirnfläche (16) aufgenommenen Gelenkkreuzzapfen (1) mit einem eine umlaufende Dichtfläche bildenden Konusteil (30), bestehend aus
a) zwei ringförmigen, in bzw. an die Lagerbuchse (2) einsetzbaren und eine gegenseitige Verstellung zulassenden Dichtungskörpern (4, 7) mit zumindest einer Metallarmierung (44), wobei
b) zumindest der eine als Vordichtung ausgebildete Dichtungskörper (7) aus einem nichtmetallischen Material oder einem Kunststoffmaterial gebildet ist, relativ zum anderen als Hauptdichtung (4) ausgebildeten Dichtungskörper verdrehbar ist und einen in radialer Richtung nach innen gerichteten Ansatz (49) mit einer innenliegenden Stirnseite (9) aufweist, wobei
c) die Vordichtung (7) die Hauptdichtung (4) zumindest teilweise überlappt,
**dadurch gekennzeichnet, dass**
d) die Metallarmierung (44) einen L-förmigen Querschnitt mit einem sich in radialer Richtung erstreckenden äußeren Schenkel (44a) aufweist,
e) die Hauptdichtung (4) über den äußeren Schenkel (44a) in axialer Richtung an die Stirnfläche (16) anlegbar ist,
f) die Stirnseite (9) des Ansatzes (49) in axialer Richtung gegen den äußeren Schenkel (44a) anlegbar ist und
g) der als Vordichtung ausgebildete Dichtungskörper (7) mit einer Haft-/Dichteinlage (5) drehfest verbunden oder mit dieser zusammenvulkanisiert ist.

2. Dichtungssystem nach Anspruch 1, **dadurch gekennzeichnet, dass** die Vordichtung (7) aus einem Kunststoffinaterial mit hoher Verschleißfestigkeit und niedrigem Reibungskoeffizienten besteht.

3. Dichtungssystem nach Anspruch 1 und/oder 2, **dadurch gekennzeichnet, dass** der Ansatz (49) der Vordichtung (7) zur Aufnahme und Abstützung der Haft-/Dichteinlage (5) dient.

4. Dichtungssystem nach einem der vorhergehenden Ansprüche, **dadurch gekennzeichnet, dass** die Haft-/Dichtfläche (5) der Vordichtung (7) aus einem hochelastischen Elastomer mit hohem Reibungskoeffizienten besteht.

5. Dichtungssystem nach einem der vorhergehenden Ansprüche, **dadurch gekennzeichnet, dass** die Haft-/Dichteinlage (5) der Vordichtung (7) eine Einbuchtung (46) sowie ein oder mehrere Dichtelemente (52, 52') aufweist, die gegen die Dichtfläche des Konusteils (30) anlegbar und an die plane Dichtfläche anpassbar sind.

6. Dichtungssystem nach Anspruch 1, **dadurch gekennzeichnet, dass** zumindest die die Metallarmierung (44) aufweisende Hauptdichtung (4) ein oder mehrere Dichtlippen (13, 13') aufweist, die gegen das Konusteil (30) des Gelenkkreuzzapfens (1) anlegbar sind.

7. Dichtungssystem nach Anspruch 6, **dadurch gekennzeichnet, dass** die mehrere Dichtlippen (13, 13') aufweisende Hauptdichtung (4) einen parallel zur Mittelachse (11) der Lagerbuchse (2) angeordneten Ringraum (48) aufweist, in dem die Stahlarmierung (44) eingesetzt und/oder einvulkanisiert ist.

8. Dichtungssystem nach einem der vorhergehenden Ansprüche mit einer Lagerbuchse (2) und einem Gelenkkreuzzapfen (1), **dadurch gekennzeichnet, dass** zur Aufnahme der Stahlarmierung (44) zwischen dem offenen Ende der Lagerbuchse (2) und einem Teil der Vordichtung (7) ein Ringspalt (28) vorgesehen ist.

9. Dichtungssystem nach einem der vorhergehenden Ansprüche, **dadurch gekennzeichnet, dass** alle Dichtlippen (13, 13') und alle Dichtelemente (52, 52') auf dem Konusteil (30) zur Anlage bringbar sind und/oder etwa in einer Ebene liegen.

10. Dichtungssystem nach einem der vorhergehenden Ansprüche mit einer Lagerbuchse (2) und einem Gelenkkreuzzapfen (1), **dadurch gekennzeichnet, dass** die Dichtlippen (13, 13') und die Dichtungskörper Dichtelemente (52, 52') mit Bezug auf den Außendurchmesser des Konusteils (30) ein Übermaß aufweisen.

11. Dichtungssystem nach Anspruch 10, **dadurch gekennzeichnet, dass** infolge dieses Übermaßes nach der Montage des Gelenkes eine axiale Kraft F1 entsteht, durch die die innere Stirnseite (9) des Ansatzes (49) der Vordichtung (7) gegen den Schenkel (44a) der Stahlarmierung (44) und/oder gegen die Stirnfläche (16) der Lagerbuchse (2) gepresst wird.

12. Dichtungssystem nach einem der vorhergehenden Ansprüche mit einer Lagerbuchse (2) und einem Gelenkkreuzzapfen (1), **dadurch gekennzeichnet, dass** durch Anpressung der inneren Stirnseite (9) des Ansatzes (49) gegen den Schenkel (44a) der Stahlarmierung (44) und/oder gegen die Stirnfläche (16)eine zusätzliche Dichtfläche entsteht.

13. Dichtungssystem nach einem der vorhergehenden Ansprüche, **dadurch gekennzeichnet, dass** die innere Stirnseite (9) des Ansatzes (49) der Vordichtung (7) zur Verringerung der Reibung mehrere radiale Ausnehmungen (55) aufweist, die als Schmiertaschen fungieren.

14. Dichtungssystem nach einem der vorhergehenden Ansprüche, **dadurch gekennzeichnet, dass** zur Aufnahme eines offenen Endes (6) der Lagerbuchse (2) die Vordichtung (7) mit der Hauptdichtung (4) einen Ringraum (24) bildet.

15. Dichtungssystem nach einem der vorhergehenden Ansprüche mit einer Lagerbuchse (2) und einem Gelenkkreuzzapfen (1), **dadurch gekennzeichnet, dass** die Hauptdichtung (4) mit der Lagerbuchse (2) gegenüber der Vordichtung (7) und dem Gelenkkreuzzapfen (1) oszilliert.

16. Vorrichtung nach einem der vorhergehenden Ansprüche mit einer Lagerbuchse (2) und einem Gelenkkreuzzapfen (1), **dadurch gekennzeichnet, dass** zur Aufnahme des Schenkels (44a) der Stahlarmierung (44) zwischen einem Ende der Lagerbuchse (2) und einem Teil der Vordichtung (7) ein Ringspalt (28) vorgesehen ist.

17. Vorrichtung nach Anspruch 1 mit einer Lagerbuchse (2) und einem Gelenkkreuzzapfen (1), **dadurch gekennzeichnet, dass** die Vordichtung (7) die Hauptdichtung (4) und die Lagerbuchse (2) zumindest teilweise überlappt.

## Claims

1. A sealing system for a jointed cross pin (1) retained in a bearing bush (2) with a front surface (16) with a cone piece (30) which forms a surrounding sealing surface, consisting of
a) two ring-shaped sealing bodies (4, 7) which can be inserted into or onto the bearing bush (2) and which permit a reciprocal adjustment with at least one metal reinforcement (44), whereby
b) at least one of the sealing bodies (7) which is designed as a pre-seal is formed from a non-metallic material or a synthetic material, is rotatable relative to the other sealing body which is designed as the main seal (4), and comprises in a radial direction an attachment (49) with a front side (9) which lies on the inside
c) the pre-seal (7) at least partially overlaps the main seal (4),
**characterised in that**
d) the metal reinforcement (44) comprises an L-shaped cross-profile with an outer arm (44a) which extends in a radial direction
e) the main seal (4) can be brought over the outer arm (44a) in an axial direction on the front surface (16)
f) the front surface (9) of the attachment (49) can be brought in an axial direction against the outer arm (44a), and
g) the sealing body (7) which is designed as the pre-seal is connected in such a manner that it cannot be rotated by means of a bonding/sealing insert (5), or is vulcanised together with it.

2. A sealing system according to claim 1, **characterised in that** the pre-seal (7) consists of a synthetic, hard-wearing material which also has low friction coefficients.

3. A sealing system according to claim 1 and/or claim 2, **characterised in that** the attachment (49) of the pre-seal (7) is used for retaining and supporting the bonding/sealing insert (5).

4. A sealing system according to any one of the above claims, **characterised in that** the bonding/sealing surface (5) of the pre-seal (7) consists of a highly elastic elastomer with a high friction coefficient.

5. A sealing system according to any one of the above claims, **characterised in that** the bonding/sealing insert (5) of the pre-seal (7) comprises a concavity (46) and one or more sealing elements (52, 52'), which can be brought against the sealing surface of the cone piece (30), and which can be adapted to the flat sealing surface.

6. A sealing system according to claim 1, **characterised in that** at least the main seal (4) which comprises the metal reinforcement (44) comprises one or more sealing lips (13, 13'), which can be brought against the cone piece (30) of the jointed cross pin (1).

7. A sealing system according to claim 6, **characterised in that** main seal (4) which comprises the several sealing lips (13, 13'), comprises a ring area (48) which is arranged parallel to the central axis (11) of the bearing bush (2), in which the steel reinforcement (44) is inserted and/or vulcanised in.

8. A sealing system according to any one of the above claims with a bearing bush (2) and a jointed cross pin (1), **characterised in that** in order to retain the steel reinforcement (44) a ring gap (28) is provided between the open end of the bearing bush (2) and a section of the pre-seal (7).

9. A sealing system according to any one of the above claims, **characterised in that** all sealing lips (13, 13') and all sealing elements (52, 52') can be brought onto the cone piece (30) and/or lie approximately at one level.

10. A sealing system according to any one of the above claims with a bearing bush (2) and a jointed cross pin (1), **characterised in that** the sealing lips (13, 13') and the sealing body sealing elements (52, 52') comprise an oversize in relation to the external diameter of the cone piece (30).

11. A sealing system according to claim 10, **characterised in that** as a result of the oversize following the mounting of the joint, an axial force F1 is created, through which the inner front side (9) of the attachment (49) of the pre-seal (7) is pressed against the arm (44a) of the steel reinforcement (44) and/or against the front surface (16) of the bearing bush (2).

12. A sealing system according to any one of the above claims with a bearing bush (2) and a jointed cross pin (1), **characterised in that** when the front side (9) of the attachment (49) is pressed against the arm (44a) of the steel reinforcement (44) and/or against the front surface (16), an additional sealing surface is created.

13. A sealing system according to any one of the above claims, **characterised in that** the inner front side (9) of the attachment (49) of the pre-seal (7) comprises several radial recesses (55) in order to reduce the friction, which act as lubricating pockets.

14. A sealing system according to any one of the above claims, **characterised in that** in order to retain an open end (6) of the bearing bush (2), the pre-seal (7) forms a ring area (24) with the main seal (4).

15. A sealing system according to any one of the above claims with a bearing bush (2) and a jointed cross pin (1), **characterised in that** the main seal (4) with the bearing bush (2) oscillates opposite the pre-seal (7) and the jointed cross pin (1).

16. A device according to any one of the above claims with a bearing bush (2) and a jointed cross pin (1), **characterised in that** in order to retain the arm (44a) of the steel reinforcement (44), a ring gap (28) is provided between one end of the bearing bush (2) and a section of the pre-seal (7).

17. A device according to claim 1 with a bearing bush (2) and a jointed cross pin (1), **characterised in that** the pre-seal (7) overlaps at least partially the main seal (4) and the bearing bush (2).

## Revendications

1. Système d'étanchéité pour un croisillon de cardan (1) abrité dans une bague de palier (2) avec une face frontale (16), avec un élément conique (30) formant une face d'étanchéité sur la circonférence, se composant de
a) deux corps d'étanchéité (4, 7) en forme d'anneau insérables dans ou encore contre la bague de palier (2) et permettant un déplacement mutuel avec au moins une armature de métal (44),
b) au moins un corps d'étanchéité (7) formé comme joint de préétanchéité étant construit dans un matériau non métallique ou dans une matière plastique, étant déplaçable de façon angulaire relativement à l'autre corps d'étanchéité formé comme joint principal (4) et présentant un appendice (49) tourné vers l'intérieur en direction radiale avec un côté frontal (9) placé à l'intérieur,
c) le joint de préétanchéité (7) recouvrant au moins partiellement le joint principal (4),
**caractérisé en ce que**
d) l'armature de métal (44) présente une coupe transversale en forme de L avec un côté extérieur (44a) s'étendant en direction radiale,
e) le joint principal (4) est plaçable sur la face frontale (16) en direction radiale par le côté extérieur (44a),
f) le côté frontal (9) de l'appendice (49) est plaçable contre le côté extérieur (44a) en direction axiale et
g) le corps d'étanchéité (7) formé comme joint de préétanchéité est relié de façon solidaire en rotation avec une garniture d'adhérence / d'étanchéité (5) ou bien est assemblé par vulcanisation avec ladite garniture.

2. Système d'étanchéité selon la revendication 1, **caractérisé en ce que** le joint de préétanchéité (7) se compose d'une matière plastique avec une résistance à l'usure élevée et des coefficients de frottement faibles.

3. Système d'étanchéité selon les revendications 1 et/ou 2, **caractérisé en ce que** l'appendice (49) du joint de préétanchéité (7) sert à la réception et au support de la garniture d'adhérence / d'étanchéité (5).

4. Système d'étanchéité selon l'une des revendications précédentes, **caractérisé en ce que** le côté d'adhérence / d'étanchéité (5) du joint de préétanchéité (7) se compose d'un élastomère à grande élasticité avec des coefficients de frottement élevés.

5. Système d'étanchéité selon l'une des revendications précédentes, **caractérisé en ce que** la garniture d'adhérence / d'étanchéité (5) du joint de préétanchéité (7) présente une bosse rentrante (46) ainsi qu'un ou plusieurs éléments d'étanchéité (52, 52') qui sont plaçables contre la face d'étanchéité de l'élément conique (30) et sont ajustables à la face d'étanchéité plane.

6. Système d'étanchéité selon la revendication 1, **caractérisé en ce qu'**au moins le joint principal (4) présentant l'armature de métal (44) présente une ou plusieurs lèvres d'étanchéité (13, 13'), qui sont plaçables contre l'élément conique (30) du croisillon de cardan (1).

7. Système d'étanchéité selon la revendication 6, **caractérisé en ce que** le joint principal (4) présentant plusieurs lèvres d'étanchéité (13, 13') présente un espace annulaire (48) disposé parallèlement à l'axe central (11) de la bague de palier (2), dans lequel l'armature d'acier (44) est insérée et/ou vulcanisée.

8. Système d'étanchéité selon l'une des revendications précédentes avec une bague de palier (2) et un croisillon de cardan (1), **caractérisé en ce qu'**une fente annulaire (28) est prévue pour la réception de l'armature d'acier (44) entre l'extrémité ouverte de la bague de palier (2) et une partie du joint de préétanchéité (7).

9. Système d'étanchéité selon l'une des revendications précédentes, **caractérisé en ce que** toutes les lèvres d'étanchéité (13, 13') et tous les éléments d'étanchéité (52, 52') sur l'élément conique (30) peuvent être placés de façon à faire contact et/ou sont disposés approximativement dans un plan.

10. Système d'étanchéité selon l'une des revendications précédentes avec une bague de palier (2) et un croisillon de cardan (1), **caractérisé en ce que** les lèvres d'étanchéité (13, 13') et les corps d'étanchéité éléments d'étanchéité (52, 52') présentent une cote majorée relativement au diamètre extérieur de l'élément conique (30).

11. Système d'étanchéité selon la revendication 10, **caractérisé en ce que**, en raison de cette cote majorée, après le montage de l'articulation, une force axiale F1 se produit, par laquelle le côté frontal intérieur (9) de l'appendice (49) du joint de préétanchéité (7) est pressé contre le côté (44a) de l'armature d'acier (44) et/ou contre la face frontale (16) de la bague de palier (2).

12. Système d'étanchéité selon l'une des revendications précédentes avec une bague de palier (2) et un croisillon de cardan (1), **caractérisé en ce qu'**une face d'étanchéité supplémentaire apparaît du fait de la pression du côté frontal intérieur (9) de l'appendice (49) contre le côté (44a) de l'armature d'acier (44) et/ou contre la face frontale (16).

13. Système d'étanchéité selon l'une des revendications précédentes, **caractérisé en ce que** le côté frontal intérieur (9) de l'appendice (49) du joint de préétanchéité (7) présente plusieurs entailles radiales (55) pour la réduction du frottement, qui fonctionnent comme des poches de graissage.

14. Système d'étanchéité selon l'une des revendications précédentes, **caractérisé en ce que** le joint de préétanchéité (7) forme un espace annulaire (24) avec le joint principal (4) pour la réception d'une extrémité ouverte (6) de la bague de palier (2).

15. Système d'étanchéité selon l'une des revendications précédentes avec une bague de palier (2) et un croisillon de cardan (1), **caractérisé en ce que** le joint principal (4) oscille avec la bague de palier (2) en face du joint de préétanchéité (7) et du croisillon de cardan (1).

16. Dispositif selon l'une des revendications précédentes avec une bague de palier (2) et un croisillon de cardan (1), **caractérisé en ce qu'**une fente annulaire (28) est prévue entre une extrémité de la bague de palier (2) et une partie du joint de préétanchéité (7) pour la réception du côté (44a) de l'armature d'acier (44).

17. Dispositif selon la revendication 1 avec une bague de palier (2) et un croisillon de cardan (1), **caractérisé en ce que** le joint de préétanchéité (7) recouvre au moins partiellement le joint principal (4) et la bague de palier (2).
